# EUROPEAN PATENT APPLICATION

(11) **EP 2 242 228 A1**
(43) Date of publication of application: **20.10.2010**
(21) Application number: 10156827.7
(22) Date of filing: 18.03.2010
(51) Int. Cl.: H04L 29/06, H04L 29/08

(54) **Method and system for a distributed and extensible communication framework**

(30) Priority: 23.03.2009 US 409115
(71) Applicant: Siemens Aktiengesellschaft, 80333 München (DE)
(72) Inventor: Ludwig, Hartmut, West Windsor, NJ 08550 (US); Nitzsche, Stefan, 67227, Frankenthal (DE)

(57) **Abstract**

A system for communication within an industrial control system has a node that includes an associated messaging system and a service consumer with an associated messaging gateway. The node is communicatively connected to a physical network. The service consumer is operable to send a service request for a service, the messaging gateway associated with the service consumer is operable to optimize the service request, and the messaging system associated with the node is operable to host one or more transport plug-ins. The one or more transport plug-ins is operable to provide abstraction of the request for a network protocol.

## Description

### FIELD OF THE INVENTION

The present invention relates to the field of network communication frameworks. In particular, the present invention relates to providing an extensible and dynamic communication framework between service consumers and providers.

### BACKGROUND OF THE INVENTION

Today, communication middleware in automation systems, network management systems, and control systems uses various network protocol layers directly, including adopting different addressing schemas and/or being based on object-oriented or functional-oriented communication middleware like Corba, DCOM, RPC, DCE. As a result of the direct manipulation of the network protocol layers, any change to the automation system, network management system, or control system requires changing the middleware program code.

Furthermore, current communication middleware solutions are not performance optimized and often copy a message multiple times within a single system. Copying a message multiple times consumes additional system resources, such as processor cycles and memory. Current solutions also use a centralized server that hosts the available services and other network information. The use of the single centralized server creates a single point of failure that can cripple a system or require that inefficient redundancy be built into the system.

Because current solutions require the direct use of the protocol layers, all have the same drawback-they are not optimized for industrial applications with respect to performance, stability, reliability, flexibility, technology-independence and compatibility.

### SUMMARY OF THE INVENTION

The following embodiments and aspects thereof are described and illustrated in conjunction with systems, tools, and methods that are meant to be exemplary and illustrative, not limiting in scope. In various embodiments, one or more of the above-described problems have been reduced or eliminated, while other embodiments are directed to other improvements.

A communication framework described herein can be used in automation systems, network management, and control systems. In some exemplary embodiments, a communication framework encompasses network architecture and design principles as well as re-usable components and a toolbox to create communication infrastructure and middleware. The communication framework may be used by equipment manufacturers to implement their own products. For example, business unit and equipment manufacturers can build a domain specific platform which uses the communication framework, while products may be built on top of the domain specific platform.

The products running on a communication framework can automatically and dynamically connect to other products running on the communication framework. For example, when a product using the communication framework connects to a network the product detects other products and the services those products provide. In some exemplary embodiments, this allows communication between products regardless of native programming language or network protocols.

A transparent and optimized communication framework passes messages between service providers and service consumers. In some exemplary embodiments, a message gateway and a messaging system are components used within the communication framework. Communication is routed through the message gateway and messaging system within systems running the communication framework.

The communication framework can be composed of multiple logic "nodes," each node including one or more service consumer and/or service provider. For each service consumer or provider on a particular node there is one or more associated message gateway which allow communication between consumers/providers with a messaging system. The messaging system software communicates with messaging system software on other nodes and allows service requests to be passed between consumers and providers amongst multiple network protocols. The messaging system may comprise a communication delivery layer and a transport layer. The transport layer hosts transport plug-ins which allows communication between multiple network protocols through the abstraction of the protocol. Multiple plug-ins may be used allowing multiple protocols to be supported.

The communication framework can be decentralized message-based communication middleware which can be used in various standard network environments, industry-related network environments, and network topologies. The communication framework is component-based and extensible and can be adopted to meet the needs of a given environment.

The communication framework can use a Service Oriented Architecture (SOA) and includes dynamic discovery of role specific service interfaces across the network environment. For example, a control system which manages an industrial plant can dynamically discover new services as they come online.

In one embodiment, a system for communication with an industrial control system comprises a node and a physical network communicatively connected to the node. The node comprises an associated messaging system and a service consumer with an associated messaging gateway. The service consumer is operable to send a service request for a service. The messaging gateway associated with the service consumer is operable to optimize the service request. The messaging system associated with the node is operable to host one or more transport plug-ins. The one or more transport plug-ins is operable to provide abstraction of the request for a network protocol.

In another embodiment, a method for sending a remote service request comprises receiving a language-specific request from an internal service consumer for a service controlling a physical element on a remote node; converting the request into a standardized language-independent format; serializing the request into a memory optimized format; determining a dedicated physical connection to send the request; and sending the request across the dedicated physical connection using a plug-in adapted to the network protocol used.

In yet another embodiment, a computer-readable storage medium stores program code for causing a server to perform the steps of receiving a language-specific request from an internal service consumer for a service controlling a physical element on a remote node; converting the request into a standardized language-independent format; serializing the request into a memory optimized format; determining a dedicated physical connection to send the request; and sending the request across the dedicated physical connection using a plug-in adapted to the network protocol used.

In another embodiment, a communication system comprises a computer-readable storage medium storing program code to implement the communication system; one or more language adapters, wherein the language adapters are operable to receive a language specific message from a service consumer and convert the message to a standard format; a message gateway, and a message system. The message gateway comprises a serializer component, wherein the serializer is operable to convert a message to a memory efficient form, a message handler component, wherein the message handler is operable to perform one or more functions on a message, and a message gateway service interface, wherein the message gateway is operable to receive a message through the message gateway service interface. The message system comprises a communication delivery component, wherein the communication delivery component is operable to manage local and remote connections, a transport component, wherein the transport component operable to convert messages to one or more network protocols, and a message system service interface, wherein the message system is operable to receive a message through the message system service interface.

### BRIEF DESCRIPTION OF THE DRAWINGS

Embodiments of the inventions are illustrated in the figures. However, the embodiments and figures are illustrative rather than limiting; they provide examples of the invention.

FIG. 1 is a block diagram illustrating an exemplary overview of a system implementing a communication framework architecture.

FIG. 2 depicts a block diagram of logical and physical connections of an exemplary embodiment of a system implementing a communication framework architecture.

FIG. 3 depicts a block diagram of a communication channel in an exemplary embodiment of a communication framework architecture.

FIG. 4 depicts a block diagram of the layer architecture of an exemplary embodiment of a communication framework.

FIG. 5 depicts a flowchart diagram of an exemplary embodiment of a consumer request for a service.

FIG. 6 depicts a flowchart diagram of an exemplary embodiment of a receipt of a request for a service.

FIG. 7 depicts a block diagram of an exemplary implementation of a communication framework.

### DETAILED DESCRIPTION OF THE EXEMPLARY EMBODIMENTS

In the following description, several specific details are presented to provide a thorough understanding of embodiments of the invention. One skilled in the relevant art will recognize, however, that the invention can be practiced without one or more of the specific details, or in combination with other components, etc. In other instances, well-known implementations or operations are not shown or described in detail to avoid obscuring aspects of various embodiments of the invention.

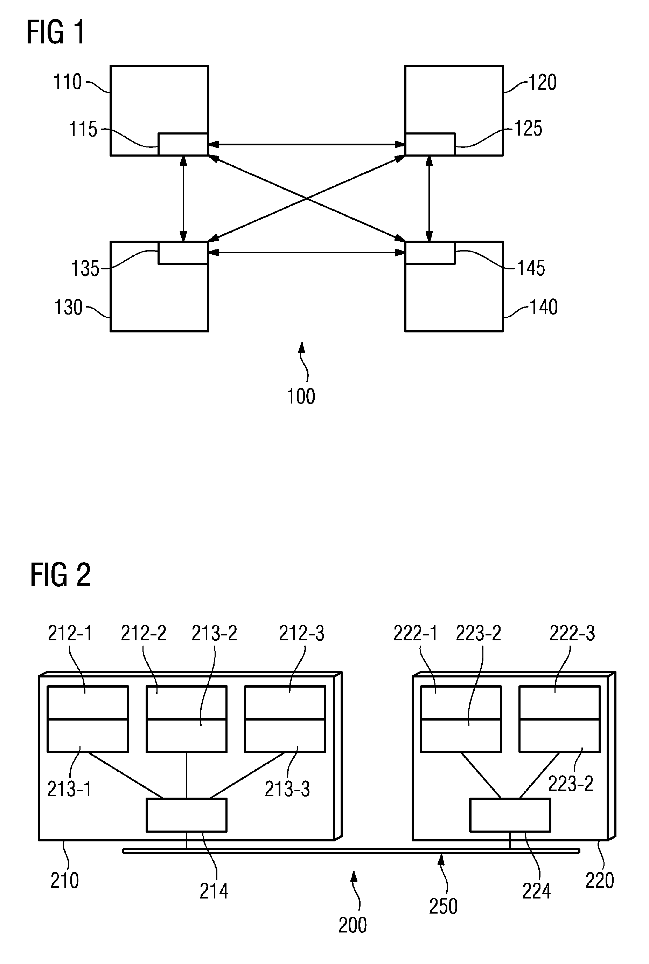

FIG. 1 depicts a block diagram of an exemplary embodiment of a System 100 implementing a communication framework architecture. The System 100 includes Node A 110, Node B 120, Node C 130 and Node D 140. Communication Framework Modules 115, 125, 135 and 145 are software modules and have been installed on Nodes 110, 120, 130 and 140, respectively.

The Nodes 110, 120, 130 and 140 are instances of the communication framework. Each of the Nodes 110, 120, 130, and 140 depicted is able to communicate with the other nodes as indicated by the connecting lines in FIG. 1. FIG. 1 demonstrates the decentralized approach for cross network communication used by System 100. In System 100 there are multiple communication paths between nodes in case of communication problems on a node or if one or more of the network nodes crashes.

In some exemplary embodiments, one physical connection between nodes can be used by multiple logical connections between service consumers and service providers in the nodes. For example, a single physical connection, such as an Ethernet connection, allows multiple transparent logical connections between service consumers and service providers. In some exemplary embodiments, each of Nodes 110, 120, 130 and 140 may include one or more service consumers and/or service providers. The service consumers can request services from the service providers, both those local to the service consumers node and those in remote nodes. In some additional exemplary embodiments, the Communication Framework Modules 115, 125, 135 and 145 are each composed of two software layers-a messaging gateway layer and a messaging system layer.

In some exemplary embodiments, System 100 comprises a combination of hardware components, software components and a process which allows managing and controlling the data / information flow in industrial applications.

In some exemplary embodiments, Nodes 110, 120, 130 and 140 may comprise one or more computer nodes. A computer node may be any computer system having a processor and memory. A computer node may be a personal computer, a specialized computer, an embedded processing system, or any other system known and/or convenient. In some exemplary embodiments, multiple nodes may be implemented on a single computer or multiple computer nodes may be included in a single node.

FIG. 2 depicts a block diagram of the logical and physical connections of an exemplary embodiment of a System 200 implementing a communication framework. System 200 comprises Node A 210, Node B 220 and Physical Connection 250. The System 200 comprises two software layers on each node in a network environment-a messaging gateway layer and a messaging system layer.

Node A 210 comprises Service Consumers 212-1, 212-2 and 212-3, associated with Messaging Gateways 213-1, 213-2 and 213-3, respectively. Node A 210 also comprises a Messaging System 214. Node B 220 comprises Service Providers 222-1 and 222-2 associated with Messaging Gateways 223-1 and 223-2, respectively. Each service consumer/provider has an associated messaging gateway that is logically connected to a messaging system. The Messaging System 214 for Node A 210 is communicatively coupled to the Messaging System 224 for Node B 220 through the physical connection 250.

Service providers may provide one or more services. A service is a logical frame around a set of components that are exposing service interfaces. A service interface is a set of standards defining how a consumer interacts with a service provider. A service provider can both provide a service for a consumer and also call other services. In some exemplary embodiments, a service is a logical frame which defines components executed by the service, the order of their execution, and their interdependencies. The components may be associated with program code - such as, DLLs, an executable, etc. Service consumers do not expose a service interface but invoke services. In order for a service consumer to use a service, the service consumer first connects to the communication framework, and then sends a message indicating that the service consumer would like to use the service.

In an exemplary embodiment, System 200 implements a service-oriented architecture. In a service-oriented architecture, the clients and servers are loosely coupled and a communication framework is required to communicate either asynchronously or synchronously. Loose coupling can describe an approach where integration between client and server assumes minimal information (only the interface contract). As a result, the risk is reduced that a change in one application or module on server or client side will force a change in another application or module on opposite side.

The Messaging Gateways 213-1, 213-2, 213-3, 223-1 and 223-2 provide connectivity to the consumer side (client) or to the service provider side (server) and provide highly optimized message communication between service providers and/or service consumer on a local node. The Messaging Gateways 213-1, 213-2, 213-3, 223-1 and 223-2 handle the language boundaries of the service consumers and service providers they are associated with. For example, a service consumer or service provider may be programmed in C++, C#, Java, etc. Each language used may be assigned its own language adapter. In a transparent manner, the messaging gateway converts messages sent from the service consumers or service provider using the language adapter corresponding to the service consumer or provider and converts the message to a standardized format and a language implementation specific format.

The Messaging Gateways 213-1, 213-2, 213-3, 223-1 and 223-2 provide support for serialization of a message into a standard memory optimized, binary message format, which facilitates local and remote message transfer. The Messaging Gateways 213-1, 213-2, 213-3, 223-1 and 223-2 may also comprise a message handler chain which provides a hooking concept for message manipulation.

The Messaging Systems 214 and 224 provide support for cross-network communication. In an exemplary embodiment, the Messaging Systems 214 and 224 can include multiple network protocol "plug-ins" that allow standardized messages to be sent and received on different network protocols. The network protocol plug-ins provide interpretation for different network protocols, for example, TCP/IP, HTTP, etc. In some exemplary embodiments, the network protocol plug-ins will usually provide for interpretation on the third or fourth layer of the network protocol stack.

Node A 210 and Node B 220 are both connected by a Physical Connection 250. The Physical Connection 250 allows network communication between the nodes. The Physical Connection 250 may be a standardized physical network connection such as Ethernet, Wi-Fi, a proprietary physical network, or any type of physical network connection known and/or convenient.

The Service Providers 222 provide services which may be accessed by the Service Consumers 212. In some exemplary embodiments, the services may provide some self-contained functionality. Exemplary services can include monitoring services, control services, alarm services, configuration services and activation services. Furthermore, Service Providers 222 may also act as a service consumer that uses functionalities of other services, or Service Providers 222 can act as the only service providers. The services may be loosely coupled and communicate through defined interfaces. Service Providers register a service interface at a service registry when they become available. Service Consumers 222 may query the service registry for registered services or subscribe for notification when a new service registers. Communications between services may be based upon asynchronous, message-based communication. The dynamic registration of services in a service registry and the discovery of registered services support loose coupling of services to service consumers.

The System 200 may comprise or be part of an industrial control system utilizing loosely coupled services. The services implement different types of business functionality according to the services role (Role-Specific Interfaces). The functionality of the services are exposed through an explicit service interface. Each interface may define a contract between a service provider and a service consumer. Service interfaces are implementation agnostic. In other words, Service interfaces are defined with no dependency or reliance on its implementation or programming language. Components implement the internal functionality of a Service. They are derived from further decomposition of the Service functionality. Components represent pieces of software functionality.

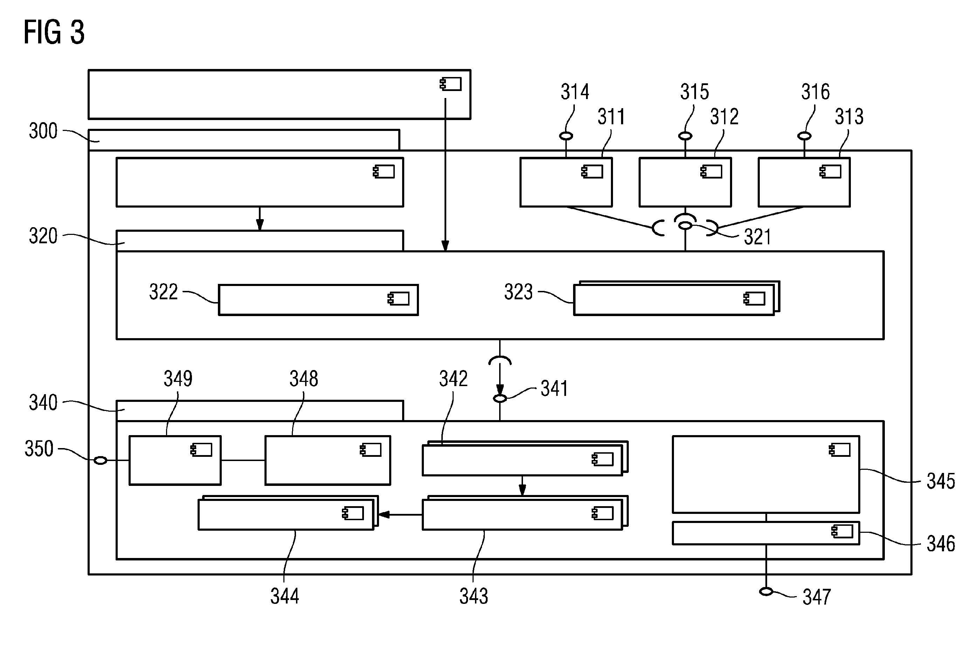

FIG. 3 depicts a block diagram of the communication channels in an exemplary embodiment of a communication framework 300. The framework 300 can be used for both service providers and service consumers. The communication framework 300 includes Language Adapters 311, 312 and 313, a Messaging Gateway layer 320 and a messaging system layer 340.

Language Adapters 311, 312 and 313 expose Service Interfaces 314, 315 and 316, respectively. The Language Adapters 311, 312 and 313 provide an interface to receive language specific messages from consumers (not shown) through their respective Service Interfaces 314, 315 and 316. The Language Adapters 311, 312 and 313 can be used to convert messages received from consumers using different programming languages such as C++, C#, Java, etc., into a form used by the Messaging Gateway 320.

The Messaging Gateway 320 includes a Language Adapter Service Interface 321, a Serializer 322 and a Message Handler 323. The Messaging Gateway 320 can provide connectivity to either a service consumer or a service provider (not depicted), depending on the implementation. The Messaging Gateway 320 provides an optimized message communication pathway between service providers and service consumers.

In an exemplary embodiment, the Messaging Gateway 320 optimizes the pathway between the service providers and service consumers because the client (consumer) side is able to determine, based on the connection method parameters, if the server (provider) is on a local or remote node. Based on that determination, a message buffer on the local provider or a message buffer on the local messaging system (acting as a proxy for remote communication) will be connected to the Messaging Gateway 320. As a result, if the buffer on the local provider is used, then the messages bypass the messaging system (standard path), and are put directly into the message buffer of local server (provider) providing and optimized path. The Messaging Gateway 320 also has a Language Adapter Service Interface 321 for connection to language adapters. The Language Adapter Service Interface 321 may be exposed as a standard service interface allowing the Language Adapters 311, 313 and 313 to send messages to the Message Gateway 320.

In some exemplary embodiments, when a consumer connects to the Messaging Gateway 320, the Messaging Gateway 320 dynamically pre-allocates a portion of shared memory for messages from the consumer. The memory may be intelligently pre-allocated based on which consumer is connecting to the Messaging Gateway 320, the past behavior of the consumer or similar consumer, or by any other way known or convenient. The pre-allocated memory may be used as a message buffer to store messages from the consumer. The messages in the shared memory can be accessed by different processes in the node. When a new process needs to access the memory, the process is given access, rather than creating a new copy of the message. The pre-allocation of memory avoids copying of messages and the movement of messages within memory. In an exemplary embodiment, the pre-allocated message buffer can be expanded on demand by increasing the size above the pre-allocated buffer size.

The Messaging Gateway 320 includes a Serializer 322 and a Message Handler 323. The Serializer 322 provides support for serialization of a message to an optimized and standardized binary message format. The Message Handler 323 may also provide a hooking concept for message manipulation. In an exemplary embodiment, the Message Handler 323 implements the hooking concept by having the client of the Messaging Gateway 320 registering a connection specific callback function, which will call when a message is received or sent. The callback function allows manipulation of the incoming/outgoing messages. The Message Handler 323 has a plug-in interface that allows functionality to operate on the message. The functionality is used as a plug-in and can be added or removed to the framework as needed. For example, a message handler plug-in could be created that encrypts messages for added security or compresses messages to reduce the message size. In an exemplary embodiment, there is a messaging gateway process running for each consumer or service provider within a node. The messaging gateway process provides services allowing communication between the service consumer or service provider and other service consumers or providers.

The Messaging System 340 provides cross-network communication between different nodes. The Messaging System 340 is a service with an exposed Messaging Gateway Service Interface 341, which allows the Messaging System 340 to be used as a service by the Messaging Gateway 320. The Messaging System 340 includes a Communication Delivery Layer 342, a Transport Layer 343, a Message Handler 344, a Diagnostic 345, a RSI Diagnostic 346, a Service Registry 348, and a RSI Service Registry 349.

The Communication Delivery Layer 342 manages local and remote communications connections and routes messages depending on the dedicated connection. The Communication Delivery Layer 342 acts as the primary connection between local communication in the local node and remote communication between different logical nodes. The Communication Delivery Layer 342 is also responsible for message routing, including message routing between two transport protocol plug-ins, which is necessary for message routing between transport protocols, as well as for message routing over dedicated network nodes.

The Transport Layer 343 is responsible for connecting to the various network protocols. The Transport Layer 343 manages and hosts different transport plug-ins which correspond to various network protocols, and acts as an abstraction layer for transport protocols. A single transport plug-in manages one network protocol, but the transport layer 343 can manage multiple transport plug-ins in parallel. The transport plug-in concept allows communication across node boundaries by abstracting the underlying network protocol layer and the communication endpoint. Additional plug-ins can be added dynamically to the Transport Layer 343, allowing the Messaging System 340 to handle additional network protocols.

In some exemplary embodiments, the Transport Layer 343 communicates with different endpoints. The endpoints may be a computer system connected to a network and may comprise one or more nodes. The endpoints may be a first party component or a third party component. The transport layer 343 ensures protocol compatibility and protocol interoperability by using version information for transport messages and a common transport message definition. For example, the version information may be a number indicating the revision number of the protocol, the transport messages and the software modules are. In some exemplary embodiments, the common transport message definition comprises a set of properties that define the structure of the common transport message.

The Message Handler 344 has a plug-in interface having functionality to operate on the message. The functionality is used as a plug-in and can be added or removed to the framework as needed. For example, a message handler plug-in could be created where the message is encrypted for added security or the message may be compressed to reduce message size. The Message Handler 344 typically handles plug-ins related to protocol specific aspects of network communication. For example, messages can be logged at the protocol level or security information can be erased before sending messages.

The RSI Diagnostic 346 exposes a service interface 347 that allows different diagnostic information to be gathered from the Communication Framework 300. The Diagnostic 345 is coupled with the RSI Diagnostic 346 and provides diagnostic information. The Diagnostic 345 is able to determine whether the behavior of a system is correct or wrong. The RSI Diagnostic 346 interface provides information on which a client is able to evaluate if the behavior of the communication framework 300 is correct.

The Messaging System 340 also includes a Service Registry 348 and RSI Service Registry 349. The RSI Service Registry 349 exposes a service interface 350 which allows service consumers to search for different service providers stored in the Service Registry 349. In an exemplary embodiment, the Service Registry 349 includes a dynamically updated collection of services available. The Service Registry 348 can also manage a service endpoint table, which is a collection of local and remote service endpoint information that includes IP addresses, ports, context ids, service ids, service instance names, service interfaces, etc. In the exemplary embodiments where the Service Registry 348 manages a service endpoint table, the communication framework 300 provides a communication infrastructure for service oriented architecture. In an exemplary embodiment, the RSI Service Registry 349 implements the interface that allows accessing the Service Registry 348.

In an exemplary embodiment, the Communication Framework 300 is based on an operating system abstraction layer which guarantees portability to various operating systems and allows the Communication Framework 300 to scale from embedded systems to workstations. For example, the operating system abstraction layer ("OSAL") may provide a minimal set of platform-independent interfaces to platform-dependent functionality, such as for memory management, mutexes and sockets. In some exemplary embodiments, any missing functionality on a dedicated operating system may be implemented and provided by OSAL and due to the limitation to a minimal set of functions the OSAL is portable and scalable to embedded system as well as to workstations.

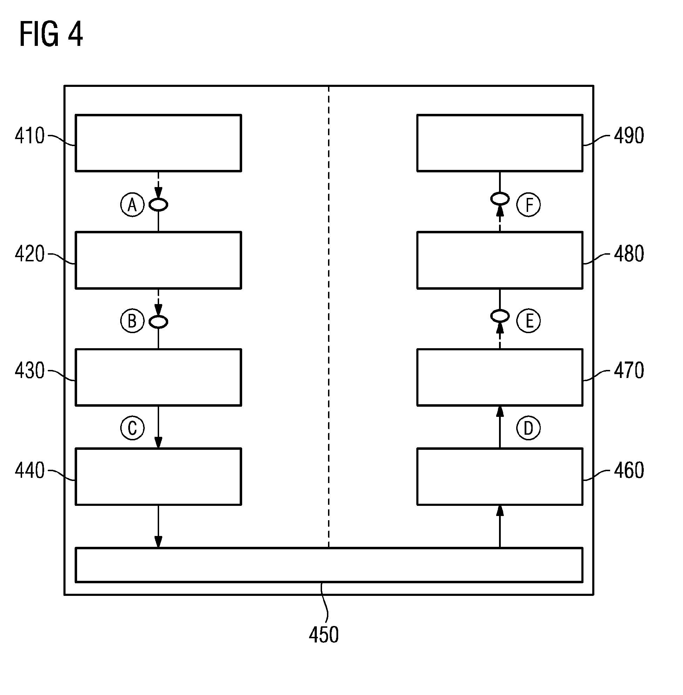

FIG. 4 depicts a block diagram of the Layer Architecture 400 of an exemplary embodiment of a communication framework. This is a logical representation of the layer architecture and does not necessarily correlate to a physical implementation of the system. Layer Architecture 400 includes the following programming interfaces (API's): a Service Interface Delegate API 420, a Stub API 430, a Messaging Gateway API 440, a Messaging System API 450, a Messaging Gateway API 460, a Skeleton API 470, and a Service Interface Implementation API 480. Client 410 depicts the application layer as the client creates a message requesting a service from the Server 490.

The Service Interface API 420 depicts the role-specific interface layer of the role-specific interface where the service interface is delegated. The Service Interface API 420 is a role-specific interface-delegate ("RSI-D"), the programming language specific interface used by an application developer when accessing a service interface with the benefits of the RSI-D, e.g., support for distributed services and redundancy.

The Stub API 430 depicts the explicit interface layer where the stub initiates a call to a remote object using the specific language interface of the application, and therefore is language/technology specific. The Stub API 430 may be used by the RSI-D or by an application developer if no RSI-D is provided. In an exemplary embodiment, the Stub API 430 has language specific interfaces to delegate that enable clients to access convenient interfaces independent of actual service interfaces (which may be unnecessarily complex). The Stub API 430 can map a large and complex interface into one which is suitable for the client to use. In an exemplary embodiment, transparent to a service consumer, a delegate may map a service interface into the best interface for the service consumer, and perform load balancing and provide redundancy for the service.

The Messaging Gateway API 440 depicts the communication framework layer of the messaging gateway on the client's node. The Messaging Gateway API 440 handles messages from multiple programming languages and serializes the message into a memory efficient format for sending. The Messaging Gateway API 440 provides basic access to messages, e.g. creation of messages and/or read/write of basic data types. Multiple versions of this API may be provided for C++, Java, and C#, and the Messaging Gateway API 440 may be used as a generic API for sending messages. In an exemplary embodiment, standardization in the Layer Architecture 400 for role-specific interfaces is done by changing the message structure and/or message content. In another exemplary embodiment, the Messaging Gateway API can be used in conjunction with a messaging gateway is similar to the Messaging Gateway 320 described in reference to Fig. 3.

The Messaging System 450 depicts the messaging system which handles the cross network communication. The Messaging System 450 determines the correct dedicated connection to route the message. The message is abstracted for the particular network protocol using a plug-in devised for that particular protocol. In an exemplary embodiment, the messaging system is similar to the messaging system 340 described in reference to Fig. 3.

The Messaging Gateway 460 depicts the messaging gateway on the data source's node. The messaging gateway is able to convert messages which are in a standard memory efficient format and convert them into language specific message. In an exemplary embodiment, the messaging gateway is similar to the messaging gateway 320 described in reference to Fig. 3.

The Skeleton API 470 depicts the skeleton receiving the call by Stub API 430 to a remote object. The skeleton executes the called procedure. In some exemplary embodiments, a RSI-D serves as client interface for a RSI and will therefore be very similar. As a result, for most RSIs there may be a corresponding RSI-D for client usage. In some further exemplary embodiments, there are RSIs for the two RSI-Ds. The RSI-D allows the hiding of distribution and provides the client a single point of access.

The Service Interface Implementation API 480 depicts a service interface implementation. The Service Interface Implementation API 480 depicts the direct manipulation of the server. The Service Interface Implementation API 480 is an API of the data source or data/service provider. In some exemplary embodiments, the Service Interface Implementation API 480 is implemented by service business logic or data source.

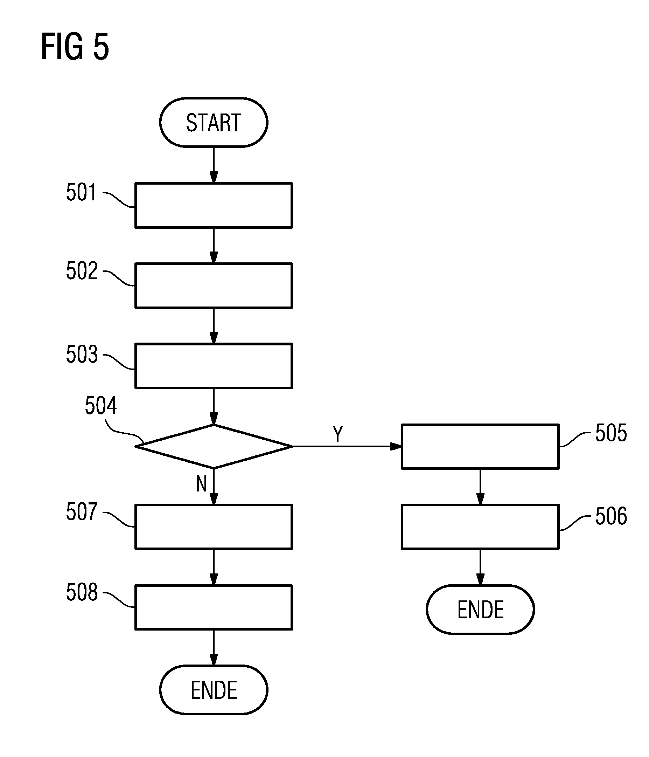

FIG. 5 depicts a flowchart of the steps performed by an exemplary embodiment of a communication framework. FIG. 5 depicts the decision process used to determine whether the messaging gateway connects to a local or to a remote service and based on that decision whether the message buffer of a local provider or a message buffer of the local messaging system (proxy for remote communication) will be connected. In an exemplary embodiment, when a local service is used, the messages bypass the messaging system (standard path) and can be put directly into the message buffer of local server (provider) (optimized path). FIG. 5 depicts a logical representation of steps and does not necessarily correlate to a physical implementation of the system.

In block 501, one or more services register with a service registry in the communication framework. The services can be either local or remote to the service registry with which they register. In an exemplary embodiment, a service registers its service interface with a service registry in the messaging system layer of the communication framework.

In block 502, a consumer connects with the communication framework. In some exemplary embodiments, the consumer will connect with the messaging gateway layer of the communication framework. Furthermore, the messaging gateway will allocate a portion of shared memory for messages from the consumer.

In block 503, the communication framework receives a message from the consumer requesting a service. In an exemplary embodiment, the communication framework is comprised of a messaging gateway and a messaging system. In another exemplary embodiment, the request is placed in a portion of shared memory designated for the consumer. In another exemplary embodiment, the consumer is unaware of whether the requested service is local or remote to the consumer and does not specify information related to a specific service provider, rather the service interface is simply invoked.

In decision node 504, the communication framework determines if the requested service is available on the local node. In an exemplary embodiment, the communication framework keeps a service registry which includes service interfaces of service providers both local and remote to the node. The service registry includes information sufficient to determine if the service provider is local or remote.

If the requested service is on the local node, then in block 505 the consumer directly connects to the service provider. In block 506, the request is placed in the service provider's queue. The message if place in a message buffer of a local provider. In an exemplary embodiment, redundant services can be invoked, either local or remote to the node, thereby allowing failover redundancy.

If the requested service is not on the local node, then in block 507 the message is converted using a plug-in into an appropriate network protocol for the remote node of the service and a message buffer of the local messaging system (proxy for remote communication) will be connected. In block 508, the message is addressed to the appropriate remote node and sent using a physical network connection. In an exemplary embodiment, redundant services will be invoked allowing failover redundancy.

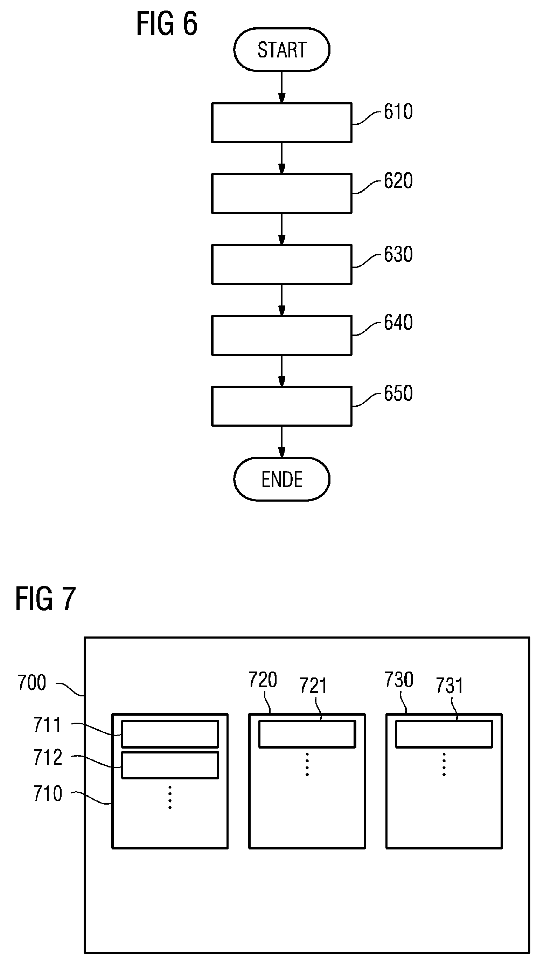

FIG. 6 depicts a flowchart diagram of a receipt of a request for a service. FIG. 6 depicts the workflow on server (provider side) if a message arrives in a messaging system and may be forwarded to a message buffer of a server (provider). FIG. 6 depicts a logical representation of the steps and does not necessarily correlate to a physical implementation of the system.

In block 610, a service registers its interface with a node local to the service provider. In some exemplary embodiments, the service provider stores the service interface in a service registry.

In block 620, the service interface of the service is broadcast to other remote nodes within a system. In an exemplary embodiment, the service interface is broadcast with other service interfaces offered by service providers on the local node.

In block 630, the local node receives a request message from a physical network for the service, using the service interface provided. The message is receive by a computer or other device and formatted based on the specific protocol and physical connection used by the sender of the request.

In block 640, the message is converted from the specific network protocol into a standardized message format. The network protocol is specific to the sender of the request. The message is converted using an adapter to convert the message to a standardized format.

In block 650, the request in the message is placed in a queue for the service.

FIG. 7 depicts a block diagram of an exemplary implementation of communication framework 700 using service containers. Each service container uses the communication framework internally to decouple the component interfaces from each other and allow different technologies in one container (for example, a mix of C++ and Java components hosted in the same service container). A container provides a runtime environment for components supporting lifecycle management, dependency management, configuration management, monitoring and access to a common communication infrastructure.

Service container 710 includes services which are considered "crucial." For example, services which provide communication within the framework would be placed in service container 710. The Service Container 710 includes the Messaging Gateway 711 and Messaging System 712 services. In an exemplary embodiment, service container 710 can include communication framework components similar to those described in reference to FIG. 3. The services that are in Service Container 710 are given priority over all other services in accessing the resources of the computer node hosting the service.

Service Container 720 includes services that are considered "primary" to the system. For example, important communication framework services can be in Service Container 720. Service Container 720 includes CF Service 721. The CF Service 721 comprises important configuration files for the Communication Framework 700.

Service Container 730 includes services considered "optional" to the system. For example, services that are related to business logic and not the internal operation of the communication framework may be in Service Container 730. Service Container 730 includes Business Logic Service 731. Business Logic may be functionality for controlling industrial or network systems.

The embodiments described above are intended to be exemplary. One skilled in the art recognizes that numerous alternative components and embodiments that may be substituted for the particular examples described herein and still fall within the scope of the invention.

## Claims

1. A system for communication within an industrial control system, the system comprising:
a node comprising:
an associated messaging system; and
a service consumer with an associated messaging gateway,
a physical network communicatively connected to the node;
wherein the service consumer is operable to send a service request for a service,
wherein the messaging gateway associated with the service consumer is operable to optimize the service request,
wherein the messaging system associated with the node is operable to host one or more transport plug-ins, and
wherein the one or more transport plug-ins operable to provide abstraction of the request for a network protocol.

2. The system for communication within an industrial control system of claim 1, wherein the messaging gateway includes a transport component comprising one or more network protocol plug-ins.

3. The system for communication within an industrial control system of claim 2, wherein the one or more network protocol plug-ins is operable to convert a message to a different network protocol specific format.

4. The system for communication within an industrial control system of claim 1, wherein the service request corresponds to a service associated with controlling an industrial process.

5. The system for communication within an industrial control system of claim 1, wherein the service request corresponds to a predefined service interface.

6. The system for communication within an industrial control system of claim 1, wherein the service request is sent through the physical medium to a destination corresponding a service provider.

7. The system for communication within an industrial control system of claim 6, wherein the service provider is ascertained by using a service registry.

8. The system for communication within an industrial control system of claim 1, wherein the messaging gateway further comprises a message handler operable to perform one or more operations on the message.

9. The system for communication within an industrial control system of claim 8, wherein the message handler is operable to encrypt the message.

10. The system for communication within an industrial control system of claim 1, wherein the service consumer includes business logic related to the control of an industrial process.

11. A method for sending a remote service request, the method comprising:
receiving a language-specific request from an internal service consumer for a service controlling a physical element on a remote node;
converting the request into a standardized language-independent format;
serializing the request into a memory optimized format;
determining a dedicated physical connection to send the request; and
sending the request across the dedicated physical connection using a plug-in adapted to the network protocol used.

12. The method of claim 11, further comprising:
retrieving service provider information from a service registry.

13. The method of claim 12, further comprising:
addressing the request using the service provider information.

14. A computer-readable storage medium storing program code for causing a server to perform the steps of:
receiving a language-specific request from an internal service consumer for a service controlling a physical element on a remote node;
converting the request into a standardized language-independent format;
serializing the request into a memory optimized format;
determining a dedicated physical connection to send the request; and
sending the request across the dedicated physical connection using a plug-in adapted to the network protocol used.

15. The computer-readable storage medium of claim 14, wherein the transport component comprises one or more network protocol plug-ins.

16. The computer-readable storage medium of claim 15, wherein the one or more network protocol plug-ins is operable to convert a message to a different network protocol specific format.

17. The computer-readable storage medium of claim 14, wherein the one or more functions provided by the message handler comprises encrypting the message.

18. The computer-readable storage medium of claim 15, wherein the one or more functions provided by the message handler comprises compressing the message into a more memory efficient form.

19. The computer-readable storage medium of claim 14, wherein the received language specific message is stored in shared memory.

20. A communication system comprising:
computer-readable storage medium storing program code to implement the communication system;
one or more language adapters, wherein the language adapters are operable to receive a language specific message from a service consumer and convert the message to a standard format;
a message gateway comprising:
a serializer component, wherein the serializer is operable to convert a message to a memory efficient form;
a message handler component, wherein the message handler is operable to perform one or more functions on a message; and
a message gateway service interface;
wherein the message gateway is operable to receive a message through the message gateway service interface;
a message system comprising:
a communication delivery component, wherein the communication delivery component is operable to manage local and remote connections;
a transport component, wherein the transport component operable to convert messages to one or more network protocols; and
a message system service interface;
wherein the message system is operable to receive a message through the message system service interface
